# EUROPEAN PATENT APPLICATION

(11) **EP 0 927 935 A1**
(43) Date of publication of application: **07.07.1999**
(21) Application number: 97830725.4
(22) Date of filing: 29.12.1997
(51) Int. Cl.: G06F 12/06

(54) **Memory structure with groups of memory banks and serializing means**

(71) Applicant: BULL HN INFORMATION SYSTEMS ITALIA S.p.A., 10014 Caluso (Torino) (IT)
(72) Inventor: Grassi, Antonio, 22060 Carimate (Como) (IT); Grassi, Maurizio, 20010 Pregnana Milanese (Milano) (IT); Zanzottera, Daniele, 20020 Busto Garolfo (Milano) (IT)
(74) Representative: Perani, Aurelio

(57) **Abstract**

Central memory structure for a computer system, comprising a plurality of memory banks (M1a-M3b), each capable of storing data words, control means (Cm) for causing the reading from the memory banks (M1a-M3b) of a data block (W1a-W3b) consisting of a plurality of words requested in a chosen order, in which the memory banks (M1a-M3b) are divided into a plurality of groups (M1a-M3a, M1b-M3b), each comprising at least one memory bank connected to a corresponding data channel (125a, 125b), the words of the data block (W1a-W3b) being distributed among corresponding memory banks of each group (M1a-M3a, M1b-M3b) and the control means (Cm) causing the parallel reading of a word of the data block (W1a-W3b) from each group of memory banks (M1a-M3a, M1b-M3b), in which the memory structure further comprises serializing means (130) for receiving at its input the words read in parallel and for supplying at its output the words read in parallel in a sequence corresponding to the chosen order.

## Description

The present invention relates to a central memory structure for a computer system, and in particular to a central memory structure according to the preamble of the first claim.

Computer systems generally include one or more processors and a central memory structure, on which the processors operate directly. The central memory stores data words containing the instructions of the programs executed by the computer system, the corresponding data and the intermediate and final results of the processing operations. The central memory generally comprises a plurality of memory banks connected to each other in parallel in such a way that the desired total capacity is obtained.

Typically, a processor requests the reading from the central memory of blocks of data, each consisting of a plurality of consecutive words, for example four words (W0, W1, W2 and W3), which are requested in a given order chosen by the requesting processor. For this purpose, the requesting processor sends to the central memory structure an address permitting the identification of the requested data block within a memory bank and the identification (typically by means of the least significant bits) of the word of the data block from which the reading is to start; in the case in question, in which the data block consists of four words, the start-of-reading word is identified by the two least significant bits of the address. If, for example, the least significant bits have a value of 10, the reading starts from the word W2; when these least significant bits are increased successively by 1 (11, 00 and 01) the words W3, W0 and W1 are read in sequence. The words W2, W3, W0 and W1 are thus supplied to the requesting processor in the chosen order.

A disadvantage of known memory structures consists in the fact that the speed of reading of the memory banks is generally lower than the speed of the processors, unless memory banks produced by extremely expensive technologies are used. The reading of data blocks from the central memory therefore slows down the operation of the requesting processor and of the other processors which request the reading of further data blocks from the central memory, thus negatively affecting the performance of the whole computer system.

The object of the present invention is to overcome the aforesaid disadvantages. In order to achieve this object a central memory structure as described in the first claim is proposed.

Further characteristics and the advantages of the central memory structure according to the present invention will be made clear by the following description of a preferred embodiment of the invention, provided for information only and without restriction, with reference to the attached figures, in which:
Fig. 1 is a basic block diagram of a computer system in which the central memory structure according to the present invention can be used;
Figs. 2a and 2b show in schematic form, respectively, the structure of the control unit and the serializing unit shown in Fig. 1;
Figs. 3 illustrates in a timing diagram an example of reading from the central memory structure according to the present invention;
Fig. 4 shows in a timing diagram an example of writing to the central memory structure according to the present invention.

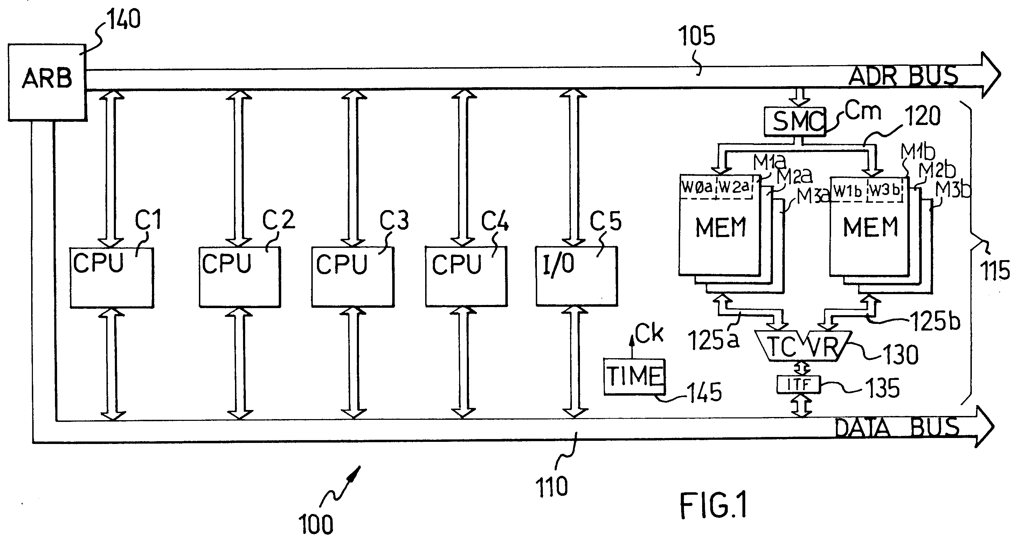

With reference to Fig. 1 in particular, there is shown a computer system 100 comprising an address bus (ADR BUS) 105 and a data bus (DATA BUS) 110, both for example of the type with 64 working bits plus a certain number of bits used for the transmission of corresponding control signals. One or more processors C1, C2, C3, C4 and C5 (five in the example illustrated), each being typically provided with an internal memory of the cache type, are connected to the address bus 105 and to the data bus 110; the processors C1-C5 consist of central processing units (CPU) , or alternatively input/output (I/O) control units, interface (bridge) units for connection to a group (cluster) of processors, or similar.

The computer system 100 includes a shared central memory structure 115 comprising a plurality of memory banks (MEM) M1a, M2a, M3a, M1b, M2b, M3b (six in the example illustrated), typically of the dynamic random access type (Dynamic Random Access Memory, or DRAM). Each addressable location (entry) of the memory banks M1a-M3b contains a simultaneously processed data word, consisting for example of 128 bits (16 bytes).

The memory banks M1a-M3b are connected to the address bus 105 through a memory control unit (System Memory Control, or SMC) Cm; the connection between the control unit Cm and the memory banks M1a-M3b is made through a memory address bus (MEM ADR BUS) 120 (of the 14-bit type, for example).

The memory banks M1a-M3b are divided into two groups M1a, M2a, M3a and M1b, M2b, M3b, each consisting of the same number of memory banks (three in the example in question); however, the present invention is also suitable for application with the memory banks divided into three, four or more groups, each consisting of a different number of memory banks (or, at the limit, a single bank). The memory banks M1a-M3a of the first group are connected to a memory data bus (MEM DATA BUSa) 125a and the memory banks M1b-3b of the second group are connected to a memory data bus (MEM DATA BUSb) 125b (or to equivalent data channels), each of which has, for example, a capacity of 128 bits (16 bytes). Preferably, the memory banks M1a-M3a, M1b-M3b of each group are controlled in interleaving mode and each memory bank M1a-M3b is associated with a corresponding internal address staticizing (latching) register (not shown in the figure).

The memory data buses 125a and 125b are connected to separate groups of terminals of a serializing unit (TCVR) 130, which in turn is connected to an interface unit 135; the interface unit 135 is connected to the system data bus 110 and typically carries out the function of staticizing the data (for the sequential transmission of portions of the data along the system data bus), of error recognition (and possibly correction), and similar.

The agents C1-C6, Cm and C1-C5, 135 are connected simultaneously to the address bus 105 and to the data bus 110 respectively, to receive the values transmitted along them; the access with reciprocal exclusion to the address bus 105 and to the data bus 110 by the corresponding agents for sending a given value is controlled by a suitable arbitration unit (ARB) 140.

A timer unit (TIME) 145 generates a clock signal Ck which is supplied to the processors C1-C5, to the central memory structure 115 (memory control unit Cm, memory banks M1a-M3b, serializing unit 130, interface unit 135) and to the arbitration unit 140 to synchronize the operation of the computer system 100.

The data are exchanged between the processors C1-C5 and the central memory structure 115 in blocks consisting of two or more words; typically a data block is a 512-bit (64-byte) cache memory line, and therefore consists of four 16-byte words. The words of each data block are distributed to corresponding memory banks M1a-M3a, M1b-M3b of the two groups. For example, a data block consisting of four words W0a, W1b, W2a and W3b will be considered. The even words W0a and W2a are stored in consecutive locations of a memory bank of the first group, for example the memory bank M1a; the odd words W1b and W3b are stored in the same locations of the corresponding memory bank M1b of the second group.

A value (ADR), comprising a portion (DAdr) indicating an address of a data block (in the central memory, in a register inside a processor, in a remote memory of a cluster of processors, or similar) and a portion (DOp) indicating the type of operation requested (reading, writing, reading with the intention of modifying the data, or similar), is transmitted along the address bus 105; typically, the data are not controlled in an ordered flow and may be supplied to a requesting processor in any sequence (Out of Order), and therefore the value ADR transmitted along the address bus 105 also includes a tag (DTag) which identifies the requesting processor and the transaction relating to it. A data block is transmitted along the data bus 110 by serializing the operation into a plurality of successive stages (8 in the example in question), during each of which one 64-bit portion and the associated identifying tag DTag are transmitted.

The central memory structure according to the present invention is, however, also suitable for use in other computer systems, for example those having a different number of processors (at the limit, only one, in a single-processor system), with the memory banks of each group not controlled in interleaving mode, with an arbitration unit provided within the memory control unit, and similar.

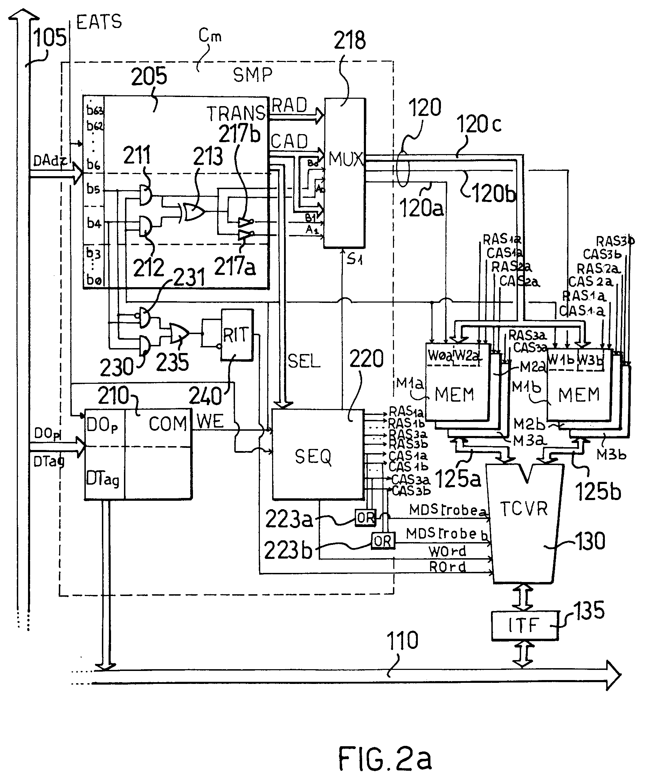

With reference now to Fig. 2a (the elements previously shown in Fig. 1 are indicated by the same reference numbers or symbols), the memory control unit Cm includes a translation logic (TRANS) 205 and a command logic (COM) 210 which receive from the address bus 105, respectively, the portion of the value ADR containing the address DAdr of the data block (to be read or written) and the portion of the value ADR containing the type of operation DOp and the identifying tag DTag relating to the data block. The reception of this value transmitted along the address bus 105 is controlled by a validation signal (Early Transfer Start, or EATS) generated by the arbitration unit.

The command logic 210 stores the identifying tag DTag so that it can be sent along the data bus 110 simultaneously with the words of the corresponding data block read from the memory banks M1a-M3b. The command logic 210 also derives from the value DOp a signal WE indicating the type of operation (reading or writing) to be executed at the locations addressed by the value DAdr, which is sent along a dedicated line to the memory banks M1a-M3b; typically, the signal WE takes a logical value 1 to indicate a reading operation and a logical value 0 to indicate a writing operation.

The value DAdr received from the translation logic 205 consists of a portion which identifies the locations of the memory banks M1a-M3b from which the data block (requested by a processor) is to be read or to which the data block (sent by a processor) is to be written; a further portion of the value DAdr (typically consisting of the least significant bits) identifies the word from which the reading is to start within the data block (writing, however, always starts from the first word of the data block). In the case in question, in which the value DAdr consists of 64 bits (b₆₃, b₆₂, ..., b₆, b₅, b₄, b₃, ..., b₀), and in which each data block includes four words W0a, W1b, W2a and W3b), the most significant bits b₆₃, b₆₂, ..., b₆ identify the locations corresponding to the data block, while the two least significant bits b₅, b₄ identify the start-of-reading word (the bits b₃, ..., b₀ are used in some special cases to identify a single byte within such a word).

Each memory location is addressable by means of a memory address consisting of a row address (comprising 12 bits, for example) and a column address (comprising 10 bits, for example); in the example in question, in which each data block consists of two consecutive words for each memory bank M1a-M3a, M1b-M3b of each group, the address DAdr is translated into a common row address RAD and into two column addresses CAD0a, CAD1a and CAD0b, CAD1b which are specific to the groups of memory banks M1a-M3a and M1b-M3b respectively.

In particular, the translation logic 205 generates from the most significant bits b₆₃, b₆₂, ..., b₆ of the value DAdr a value SEL indicating the memory bank M1a-M3a and M1b-M3b to be selected in each group. The translation logic 205 also generates the row address RAD and the portion CAD common to the column addresses CAD0a, CAD1a and CAD0b, CAD1b; in the example in question, in which the memory bank M1a-M3a and M1b-M3b selected in each group contains two words (W0a, W2a and W1b, W3b) and in which the column addresses consist of 10 bits each, the portion CAD comprises the 9 most significant bits common to the column addresses CAD0a, CAD1a and CAD0b, CAD1b.

The least significant bit of the column addresses CAD0a, CAD1a and CAD0b, CAD1b (which identifies the words W0a, W2a and W1b, W3b in the selected memory bank of the groups M1a-M3a and M1b-M3b respectively) is derived by the translation logic 205 as a function of the value of the least significant bits b₅, b₄ of the value DAdr during a reading operation, and is always set to the value 0,1 during a writing operation. In particular, the least significant bits b₅, b₄ are applied to a first input of an AND logic gate 211, 212, to whose second input the signal WE produced by the command logic 210 is applied. Thus the output of the AND logic gates 211, 212 will be equal to the value of the bits b₅, b₄ during a reading operation (WE=1) and will always be equal to the logical value 0 during a writing operation (WE=0). The outputs of the AND logic gates 211, 212 are connected to the input of an exclusive-OR (XOR) logic gate 213, whose output forms the least significant bit A₀ of the column address CAD0a; the least significant bit B₀ of the column address CAD0b is derived directly from the output of the AND logic gate 211. Thus, during a reading operation, when the bits b₅, b₄ have the value 00, the bits A₀, B₀ take the value 00 (selecting the words W0a and W1b respectively), when the bits b₅, b₄ have the value 01, the bits A₀, B₀ take the value 10 (selecting the words W2a and W1b), when the bits b₅, b₄ have the value 10, the bits A₀, B₀ take the value 11 (selecting the words W2a and W3b), and when the bits b₅, b₄ have the value 11, the bits A₀, B₀ take the value 01 (selecting the words W0a and W3b); during a writing operation, however, the bits A₀, B₀ always take the value 00.

The bits A₀, B₀ are applied to the input of a NOT logic gate 217a, 217b, whose output forms the least significant bits A₁, B₁ of the column addresses CAD1a, CAD1b. The row address RAD, the common portion of the column addresses CAD together with the bits A₀, B₀, and the common portion CAD together with the bits A₁, B₁ are applied to separate inputs of a multiplexer (MUX) 218. The multiplexer 218 transfers to its output connected to the memory address bus 120 the value present at only one of these inputs, according to a selection signal S1. In particular, the memory address bus 120 comprises a portion 120c (along which the row address RAD or the common portion of the column addresses CAD is transmitted) common to all the memory banks M1a-M3b, and a line 120a and 120b (along which the bits A₀, A₁ and B₀, B₁ respectively are transmitted) to which are connected the memory banks of the first group M1a-M3a and of the second group M1b-M3b respectively. Thus the row address RAD, the first column address CAD0a, CAD0b and the second column address CAD1a, CAD1b are sent in sequence to the memory banks M1a-M3a, M1b-M3b.

Similar considerations are applicable in the case in which each group of memory banks M1a-M3a, M1b-M3b stores three, four or more words of the data block which are not consecutive in the chosen order, with the control unit Cm which independently addresses each group of memory banks M1a-M3a, M1b-M3b in such a way that the words read in parallel are consecutive in the chosen order. The structure described above offers the advantage of reading in parallel from a memory bank of each group M1a-M3a and M1b-M3b the words of the data block in the same order in which these words are to be sent to the requesting processor. This enables these words to be sent directly (as described below) to the requesting processor, without the necessity of waiting for completion of the reading of the data block. Alternatively, all the words of the requested data block are read from the memory banks M1a-M3a, M1b-M3b in a predetermined order and are then ordered in the serializing unit (similar considerations are applicable in the case in which the selected memory bank M1a-M3a, M1b-M3b in each group contains consecutive words of the data block, or only one word for each data block).

The signal WE and the selection value SEL are applied to the input of a command sequencing logic (SEQ) 220; the sequencing logic 220 essentially consists of a number of finite state machines equal to the number of memory banks M1a-M3b, which changes with each clock signal as a function of the previously received signals and is capable of keeping track of the state of the central memory; the operation of the sequencing logic 220 is synchronized with that of the logics 205 and 210 by the EATS signal generated by the arbitration unit.

The sequencing logic 220 generates the selection signal S1 for the multiplexer 218. The sequencing logic 220 is also connected to each memory bank M1a-M3b through a dedicated line for sending a row address validation signal (Row Address Strobe) RASⱼ (where j=M1a-M3b), and through a further dedicated line for sending a column address validation signal (Column Address Strobe) CASⱼ; the RASⱼ and CASⱼ signals enable each memory bank M1a-M3b to receive from the memory address bus 120 the row address RAD and column address CAD0a, CAD0b and CAD1a, CAD1b respectively transmitted along this bus, while also intrinsically executing the function of selection of the memory bank M1a-M3b.

The signals CASⱼ corresponding to the memory banks of the first group M1a-M3a and to the memory banks of the second group M1b-M3b are also applied to a logic (OR) 223a 223b which essentially executes a logical OR operation between the CASⱼ signals and generates, with a predetermined delay, a signal MDStrobeₐ, MDStrobe_{b} which indicates the validity of the value present in the memory data bus 125a, 125b. The signals MDStrobeₐ, MDStrobe_{b} are applied to the serializing unit 130 to enable the reception of the words read from the memory banks of the first group M1a-M3a and of the second group M1b-M3b respectively.

The serializing unit 130 also receives a selection signal ROrd, produced by the memory control unit Cm according to the value of the bits b₅, b₄ and indicating the order in which the words read in parallel from the memory banks of the groups M1a-M3a and M1b-M3b are to be sent to the requesting processor. In particular, the bits b₅ and b₄ are applied to the input of a first AND logic gate 230, while the negated bit b₄ and bit b₅ are applied to the input of a second AND logic gate 231. The outputs of the AND logic gates 230, 231 are connected to the inputs of an OR logic gate 235, whose output is connected to a unit (RIT) 240 which transmits to its output, with a specified delay, firstly the value present at the output of the OR logic gate 235 and subsequently the same value negated.

Thus, when the bits b₅, b₄ have the value 00 (words read W0a, W1b and W2a, W3b) the signal ROrd takes the value 0 and then 1 (selecting sending to the requesting processor before the word read from the group of memory banks M1a-M3a and subsequently the word read from the group of memory banks M1b-M3b, in other words W0a, W1b, W2a and W3b), when the bits b₅, b₄ have the value 01 (words read W2a, W1b and W0a, W3b) the signal ROrd takes the value 1 and then 0 (selecting sending before the word read from the group of memory banks M1b-M3b and subsequently the word read from the group of memory banks M1a-M3a, in other words W1b, W2a, W3b and W0a), when the bits b₅, b₄ have the value 10 (words read W2a, W3b and W0a, W1b) the signal ROrd takes the value 0 and 1 (selecting sending before the word read from the group M1a-M3a and subsequently the word read from the group M1b-M3b, in other words W2a, W3b, W0a and W1b), and when the bits b₅, b₄ have the value 11 (words read W0a, W3b and W2a, W1b) the signal ROrd takes the value 1 and 0 (selecting sending before the word read from the group M1b-M3b and subsequently the word read from the group M1a-M3a, in other words W3b, W0a, W1b and W2a).

The sequencing logic 220 also generates a selection signal WOrd which is supplied to the serializing unit 130 to enable the reception of the words transmitted by the interface unit 135 during a writing operation. In particular, the signal WOrd takes, at a given instant, a value 0 and then a value 1, in such a way that the words received from the interface unit 135 are sent alternately along the memory data buses 125a and 125b for their writing to the first group of memory banks M1a-M3a and to the second group of memory banks M1b-M3b respectively.

Further signals are exchanged between the sequencing logic 220 and the arbitration unit on dedicated lines (not shown in the figure) to control the request for and the granting of access to the data bus 110 and the occupation of the bus (for the command logic 210 and for the interface unit 135). The sequencing logic 220 is also connected to the arbitration unit by dedicated channels (not shown in the figure) for the control of a snooping process, used to ensure the consistency of the data blocks in the memory banks M1a-M3b replicated in the cache memories of the processors.

However, the present invention is also suitable for application with control units which use other types of signal, different connections to the other units of the computer system, and in general with equivalent control means for causing the parallel reading of a word of the data block from each group of memory banks M1a-M3a and M1b-M3b.

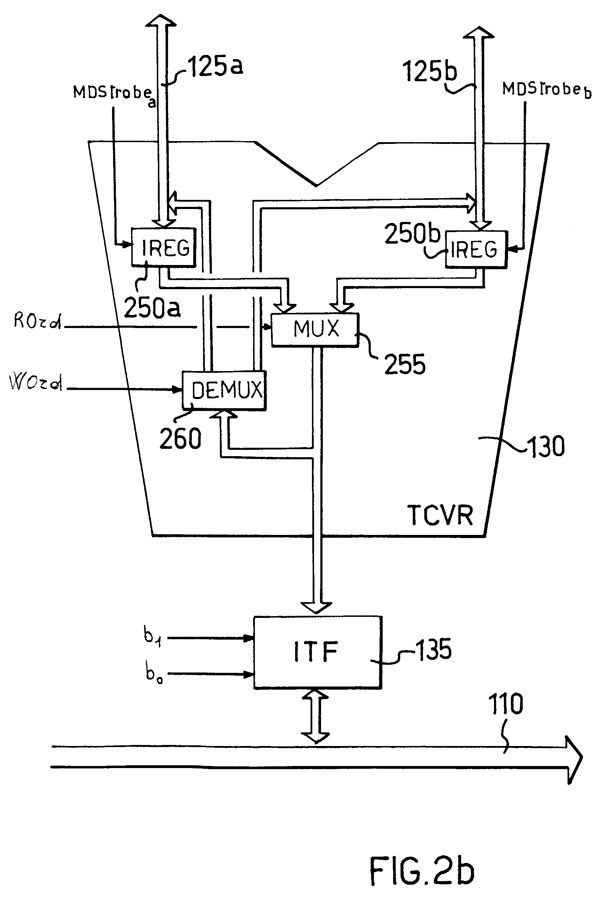

With reference now to Fig. 2b (the elements previously represented in Fig. 1 are indicated with the same reference numbers), the serializing unit 130 includes an input register (IREG) 250a and 250b connected to the memory data bus 125a and to the memory data bus 125b respectively. The input registers 250a, 250b receive and staticize, in response to the enabling signal MDStrobeₐ, MDStrobe_{b} sent by the memory control unit, the words read in parallel from the corresponding memory banks. The input registers 250a and 250b are connected to separate inputs of a multiplexer (MUX) 255. The multiplexer 255 transfers to its output, connected to the interface unit 135, the value present at only one of these inputs, according to the selection signal ROrd sent by the memory control unit.

During a reading operation, the words of a first pair read in parallel from the first and from the second group of memory banks are stored in the input registers 250a and 250b respectively; these words are then sent to the interface unit 135 in the sequence corresponding to the order chosen by the requesting processor. In particular, when the selection signal ROrd takes the logical value 0, the word stored in the input register 250a is transferred to the output of the multiplexer 255 (and therefore to the interface unit 135), while when the selection signal ROrd takes the logical value 1, the word stored in the input register 250b is transferred to the output of the multiplexer 255. Subsequently, the words of a second pair read in parallel from the two groups of memory banks are similarly stored in the input registers 250a, 250b and then sent to the interface unit 135 in the sequence corresponding to the chosen order; it should be noted that the speed of the serializing unit 130 is generally greater than that of the memory banks, and therefore when the words of the second pair are loaded into the input registers 250a, 250b both words of the first pair have already been sent to the interface unit 135.

Alternatively, equivalent serializing means are used to receive at the input the words read in parallel and to supply at the output the words read in parallel in a sequence corresponding to the chosen order.

The serializing unit 130 also includes a demultiplying circuit, or demultiplexer (DEMUX), 260, which has an input connected to the interface unit 135 and two separate outputs, of which one is connected to the memory data bus 125a and one is connected to the memory data bus 125b. The demultiplexer 260 transfers to one of the two outputs the value present at the input, according to the selection signal WOrd sent by the memory control unit.

During a writing operation, the words of the data block to be written to the memory banks are sent by a processor along the data bus 110 in the correct order in which the words are to be written (W0a, W1b, W2a and W3b), with the least significant bits b₅, b₄ of the value DAdr equal to 00. However, let us now consider the case in which a processor requests the reading of a data block from the central memory, sending along the data bus the value DAdr indicating the address of the data block and the order in which the words of the data block are requested. The content of the address bus is monitored continuously by each processor, by the snooping process, in order to check whether the requested data block is present in its own cache memory. In the case in which the requested data block is present in a processor in a form changed from the (no longer valid) value present in the central memory, this processor intervenes by directly supplying the words of the data block to the requesting processor in the order chosen by the latter processor. Typically, for example if the processor has requested the data block without the intention of changing it, the updated value of the data block supplied by the intervening processor is also written to the central memory. In this case, the words of the data block are received by the interface unit 135 in the order chosen by the requesting processor (according to the value of the least significant bits b₅, b₄).

In general, all the words of the data blocks to be written are loaded into a suitable register (not shown in the figure) in the interface unit 135, which also receives at its input the least significant bits b₅, b₄ of the value DAdr from the memory control unit. The words loaded into the interface unit 135 are sent in sequence to the serializing unit 130, starting with the word identified by the bits b₅, b₄. Thus the words of the data block are supplied to the serializing unit 130 still in the correct order in which the words are to be written (W0a, W1b, W2a and W3b). These words are then sent, through the demultiplexer 260, along the memory data bus 125a and the memory data bus 125b alternatively for their writing to the first and second group of memory banks respectively. In particular, when the selection signal WOrd takes the logical value 0, the word received from the interface unit 135 is transferred along the memory data bus 125a, while when the selection signal WOrd takes the logical value 1 the word received from the interface unit 135 is transferred to the memory data bus 125b.

With the solution described above, it is possible to use a standard interface unit 135 without any modification from those used in known memory structures. In a different embodiment of the present invention, the words of the data block are sent directly in pairs to the serializing unit 130 in the same order as that in which they were received by the interface unit 135; the words of each pair are staticized and then written in parallel to the corresponding location of the memory banks of each group, using the independent addressing structure already present for the reading operations. In general, the serializing unit includes means for sending each word of a data block to be written to the memory banks along the corresponding memory data bus, with the control means which cause the word to be written to a memory bank selected from the corresponding group of memory banks; alternatively, other equivalent means of writing are used.

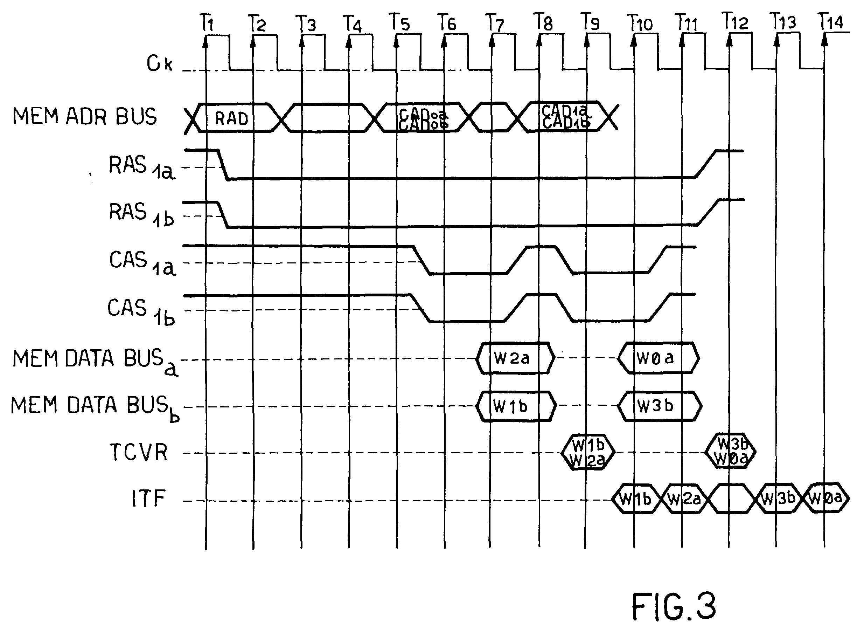

An example of the reading of a data block from the central memory structure according to the present invention is illustrated by the timing diagram in Fig. 3. As usual, the various signals are set/reset, in other words they are switched to a low/high value (or vice versa) at the rising edge of the clock signal Ck; at a subsequent rising edge (after one or more periods of the clock signal Ck), the state of the signals is stable and can be recognized (strobed); a signal (one bit) is represented by a single line, while values comprising a plurality of bits are represented by a band (the points of intersection are the switching instants).

It is assumed that a processor requests the reading of the data block W0a, W1b, W2a, W3b (stored in the memory banks indicated by M1a and M1b in Fig. 1), starting from the word W1a (b₅, b₄ = 01). The memory control unit sends the row address RAD along the memory address bus (MEM ADR BUS) (instants T1-T2); the signal WE (not shown in the figure) is kept reset to indicate that the operation to be executed at the addressed location is a reading operation. At the instant T2 the row address validation signals RAS₁ₐ and RAS_{1b} corresponding to the memory banks M1a and M1b respectively are set. At the instants T5-T6, for example, the first column address CAD0a and CAD0b is sent simultaneously along the memory address bus to the banks of the first and second group respectively. The corresponding column address validation signals CAS₁ₐ and CAS_{1b} are set at the instant T6, in such a way that the words W2a and W1b are read in parallel from the memory banks M1a and M1b respectively, at the instants T7-T8; these words are simultaneously transferred along the corresponding memory data buses MEM DATA BUSa and MEM DATA BUSb so that they are received (at the instant T9) by the serializing unit (TCVR). Subsequently (instants T10-T11), the words are sent in the correct order (W1b and W2a) to the interface unit (ITF).

If we return to the instant T8, the signals CAS₁ₐ and CAS_{1b} are reset; simultaneously, the second column address CAD1a and CAD1b is sent along the memory address bus (instants T8-T9), and at the subsequent instant T9 the signals CAS₁ₐ and CAS_{1b} are set again, in such a way that the words W0a and W3b are read in parallel from the memory banks M1a and M1b at the instants T10-T11 and simultaneously transferred along the corresponding memory data bus MEM DATA BUSa and MEM DATA BUSb. These words are received at the instant T12 by the serializing unit and subsequently (instants T13-T14) are sent in the correct order (W3b and W0a) to the interface unit (ITF). Meanwhile, the signals CAS₁ₐ, CAS_{1b} and RAS₁ₐ, RAS_{1b} are reset, at the instants T11 and T12 respectively, thus terminating the access to the memory banks M1a and M1b.

The structure according to the present invention substantially reduces the duration of the operation of reading a data block. In particular, this solution enables a plurality of words to be read in parallel from the memory banks of each group; moreover, the time required for the serialization of the words read in parallel is used to access the said (or other) memory banks. This enables the central memory structure to supply a flow of words at a frequency substantially equal to twice the access frequency of each individual memory bank (or, in general, equal to a multiple of this value).

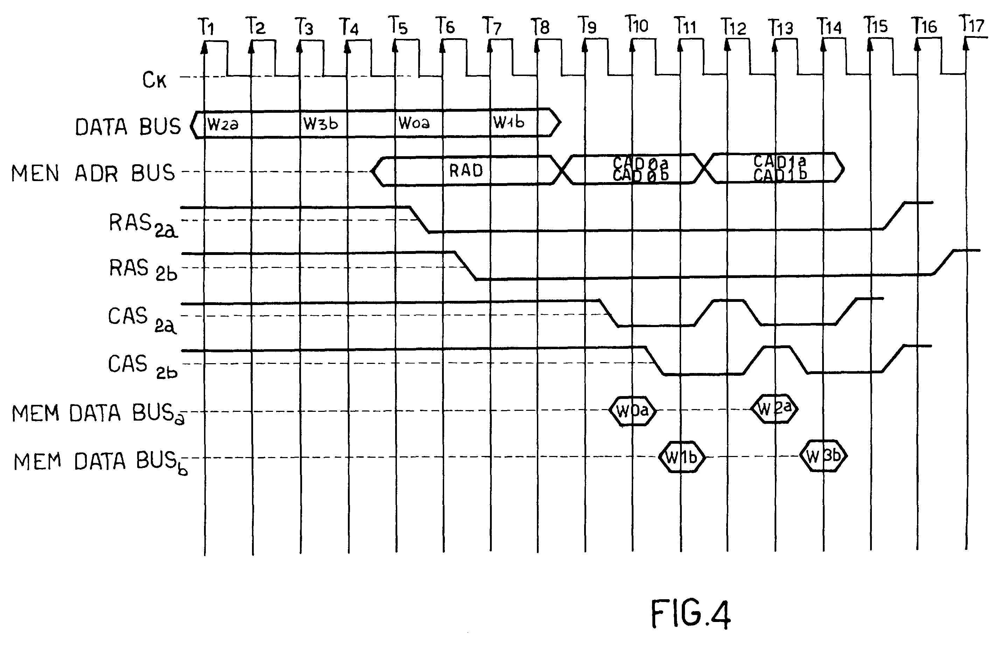

With reference now to Fig. 4, an example of the writing of a data block to the central memory structure according to the present invention is illustrated in a timing diagram. It is assumed that an intervening processor requests the writing of a data block (for example to the memory banks indicated by M2a and M2b in Fig. 1), sending the corresponding words along the system data bus (DATA BUS) in the order W2a, W3b, W0a, W1b (b₅, b₄ = 10); since the system data bus has a capacity of 64 bits, one half-word is transmitted at each clock signal, and therefore the transmission of the data block requires eight clock periods (instants T1-T8).

The words received by the interface unit are sent to the serializing unit in each case in the correct order (W0a, W1b, W2a, W3b) in which they are to be written to the memory banks. The memory control unit sends the row address RAD along the memory address bus (MEM ADR BUS) at the instants T5-T8; the signal WE (not shown in the figure) is set to indicate that the operation to be executed at the addressed location is a writing operation. At the instant T6 and T7, the row address validation signals RAS₂ₐ and RAS_{2b} respectively, corresponding to the memory banks M2a and M2b, are set. At the instants T9-T11, for example, the first column address CAD0a and CAD0b is sent simultaneously along the memory address bus to the banks of the first and second group respectively. The corresponding column address validation signals CAS₂ₐ and CAS_{2b} are set at the instants T10 and T11 respectively; simultaneously, the word W0a is transferred along the first memory data bus (MEM DATA BUSa) at the instant T10 and the word W1b is transferred along the second memory data bus (MEM DATA BUSb) at the instant T11, in such a way that they are written almost in parallel to the memory banks M2a and M2b respectively.

The signals CAS₂ₐ and CAS_{2b} are reset at the instants T12 and T13 respectively; simultaneously, the second column address CAD1a and CAD1b is sent along the memory address bus (instants T12-T14). The signals CAS₂ₐ and CAS_{2b} are set again at the instants T13 and T14 respectively; simultaneously, the word W2a is transferred along the first memory data bus MEM DATA BUSa at the instant T13 and the word W3b is transferred along the second memory data bus MEM DATA BUSb at the instant T14, in such a way that they are written almost in parallel to the memory banks M2a and M2b respectively. The signals CAS₂ₐ and CAS_{2b} are reset at the instant T15 and at the instant T16 respectively, and the signals RAS₂ₐ and RAS_{2b} are reset at the instant T16 and at the instant T17 respectively, thus terminating the access to the memory banks M2a and M2b.

Thus the writing of the words to the memory banks of each group is executed at least partially in parallel, substantially reducing the duration of the whole writing operation. This enables the central memory structure to receive a flow of words at a frequency substantially equal to twice the access frequency of each individual memory bank (or, in general, equal to a multiple of this value).

Obviously, those skilled in the art may make numerous modifications and changes to the central memory structure described above, in order to meet contingent and specific requirements, all of which modifications are included within the scope of protection of the invention, as defined by the following claims.

## Claims

1. Central memory structure (115) for a computer system (100) comprising a plurality of memory banks (M1a-M3b) each of which is capable of storing data words, control means (Cm) for causing the reading from the memory banks (M1a-M3b) of a data block (W1a-W3b) consisting of a plurality of words requested in a chosen order,
characterized in that
the memory banks (M1a-M3b) are divided into a plurality of groups (M1a-M3a, M1b-M3b), each comprising at least one memory bank connected to a corresponding data channel (125a, 125b), the words of the data block (W1a-W3b) being distributed among corresponding memory banks of each group (M1a-M3a, M1b-M3b) and the control means (Cm) causing the parallel reading of a word of the data block (W1a-W3b) from each group of memory banks (M1a-M3a, M1b-M3b), in which the memory structure (115) further comprises serializing means (130) for receiving at its input the words read in parallel and for supplying at its output the words read in parallel in a sequence corresponding to the chosen order.

2. Memory structure (115) according to Claim 1, in which each group of memory banks (M1a-M3a, M1b-M3b) stores a plurality of words of the data block which are not consecutive in the chosen order, the control means (Cm) addressing each group of memory banks (M1a-M3a, M1b-M3b) independently in such a way that the words read in parallel are consecutive in the chosen order.

3. Memory structure (115) according to Claim 2, in which the control means comprise translation means (205) for receiving a value (DAdr) indicating an address of the data block and of the chosen order and for deriving from the said value (DAdr) memory addresses (RAD, CAD0a, CAD0b, CAD1a, CAD1b) to identify the words of the data block (W0a-W3b) in the memory banks (M1a-M3b), each memory address (RAD, CAD0a, CAD0b, CAD1a, CAD1b) comprising a common memory address (RAD, CAD) for the words of the data block and a specific memory address (A₀, B₀; A₁, B₁) for each group of memory banks (M1a-M3a, M1b-M3b), the memory banks of each group (M1a-M3a, M1b-M3b) being connected to the control means (Cm) through a common memory address bus (120c) for receiving the common memory address (RAD, CAD) and through at least one corresponding line (120a, 120b) for receiving the corresponding specific memory address (A₀, B₀; A₁, B₁).

4. Memory structure (115) according to Claim 3, in which the memory address (RAD, CAD0a, CAD0b, CAD1a, CAD1b) includes a row address (RAD) and a column address (CAD0a, CAD0b, CAD1a, CAD1b), the common memory address (RAD, CAD) comprising the row address (RAD) and a most significant portion (CAD) of the column address (CAD0a, CAD0b, CAD1a, CAD1b), and the specific memory address comprising a least significant portion (A₀, B₀; A₁, B₁) of the column address (CAD0a, CAD0b, CAD1a, CAD1b).

5. Memory structure (115) according to any of Claims 2 to 4, in which the serializing means (130) include a plurality of registers (250a, 250b), each connected to a corresponding data channel (125a, 125b) for receiving at the input the words read in parallel, the registers (250a, 250b) being connected to corresponding inputs of a multiplexer (255) having an output for supplying the read words in the sequence corresponding to the chosen order.

6. Memory structure (115) according to Claim 5, in which the control means comprise logic means (230, 231, 235, 240) for deriving from the said value (DAdr) a selection signal (ROrd) for the multiplexer (255).

7. Memory structure (115) according to any of Claims 1 to 6, in which the serializing means (130) comprise means (260) for sending each word of a data block (W0a-W3b) to be written to the memory banks (M1a-M3b) to the corresponding data channel (125a, 125b), the control means (Cm) causing the writing of the word of the data block to be written (W0a-W3b) to a selected memory bank in the corresponding group of memory banks (M1a-M3a, M1b-M3b).

8. Memory structure (115) according to Claim 7, further comprising interface means (135) for receiving the data block to be written (W0a-W3b) in a further chosen order and for supplying to the serializing means the words of the data block to be written (W0a-W3b) in an ordered sequence for writing to the memory banks (M1a-M3b).

9. Memory structure (115) according to Claim 8, in which the serializing means (130) include a demultiplexer (260) having an input connected to the interface means (135) for receiving in the ordered sequence the words of the data block to be written (W0a-W3b) and having a plurality of outputs, each connected to a corresponding data channel (125a, 125b) for sending each word of the data block to be written (W0a-W3b) to the corresponding group of memory banks (M1a-M3a, M1b-M3b).

10. Computer system (100) comprising the central memory structure (115) according to any one of Claims 1 to 9.

11. Method for reading a data block from a central memory structure (115) for a computer system (100) comprising a plurality of memory banks (M1a-M3b), each capable of storing data words, divided into a plurality of groups (M1a-M3a, M1b-M3b), each comprising at least one memory bank connected to a corresponding data channel (125a, 125b), the data block consisting of a plurality of words, distributed among corresponding memory banks of each group (M1a-M3a, M1b-M3b), requested in a chosen order, the method comprising the steps of:
causing the parallel reading of a word of the data block (W1a-W3b) from each group (M1a-M3a, M1b-M3b),
receiving the words read in parallel in serializing means (130),
supplying at the output the words read in parallel in a sequence corresponding to the chosen order.
